# EUROPÄISCHE PATENTSCHRIFT

(11) **EP 3 978 289 B1**
(45) Veröffentlichungstag und Bekanntmachung des Hinweises auf die Patenterteilung: **12.07.2023**
(21) Anmeldenummer: 20199804.4
(22) Anmeldetag: 02.10.2020
(51) Int. Cl.: B60K 15/077

(54) **KRAFTFAHRZEUGTANK**
MOTOR VEHICLE TANK
RÉSERVOIR DE VÉHICULE AUTOMOBILE

(43) Veröffentlichungstag der Anmeldung: 06.04.2022
(73) Patentinhaber: Magna Energy Storage Systems GesmbH, 8261 Sinabelkirchen (AT)
(72) Erfinder: FUCHS, Thomas, 8261 Sinabelkirchen (AT); HEIDENBAUER, Laura, 8200 Gleisdorf (AT)
(74) Vertreter: Zangger, Bernd

(56) Entgegenhaltungen:
- EP-A1- 0 087 508
- EP-A1- 2 730 445
- DE-A1- 4 336 574
- DE-B4- 4 336 574

## Beschreibung

### Gebiet der Erfindung

Die vorliegende Erfindung betrifft einen Kraftfahrzeugtank, umfassend ein Bauteil, das im Inneren des Tankbehälters an der Tankwand befestigt ist.

### Stand der Technik

Es ist bekannt, dass im Inneren von Tanks von Kraftfahrzeugen, insbesondere von Kraftstofftankts, Einbauteile angeordnet und am Behälter des Tanks befestigt werden können. Beispielsweise müssen Kraftstoffpumpen zum Fördern eines Kraftstoffes aus dem Tank oder verschiedene Ventile im Tank befestigt werden.

Die Bauteile können beispielsweise über Halter an der Tankwand verschraubt werden. Die Halter sind üblicherweise starre Bauteile, die der Befestigung einerseits an der Tankwand und andererseits am Bauteil dienen.

Manche Einbauteile in Tanks von Kraftfahrzeugen können im Betrieb des Kraftfahrzeuges unerwünschte Geräusche erzeugen. Gerade in der immer größer werdenden Zahl von Elektro- und Hybridfahrzeugen, deren Antriebe geräuscharm operieren können, sollen störende Geräusche vom Tanksystem, die im Inneren des Fahrzeuges wahrgenommen werden könnten, vermieden werden.

Manche Einbauteile erzeugen jedoch beinahe unvermeidlich auf Grund iherer mechanischen Funktion Geräusche, insbesondere Einbauteile mit beweglichen Kugeln, wie Roll-Over-Ventile (ROV) und Druckhalteventile (DHV).

Aus der DE 43 36 574 A1 ist eine Kraftstoff-Fördereinheit mit einer innerhalb eines Schwalltopfes angeordneten Pumpe zum Fördern des Kraftstoffes bekannt, bei der die Pumpe in einem Ring aufgenommen ist, von dem Stege in etwa tangential nach außen zum Schwalltopf führen, wobei die Stege als Federarme mit wesentlich größerer axialer Erstreckung als radialer Erstreckung zur Drehachse der Pumpe ausgebildet sind, die von oben gesehen in etwa spiralförmig gekrümmt verlaufen und zur Bildung eines als separates Bauteil in den Schwalltopf eingesetzten Pumpenhalters einstückig mit dem Ring und einem ringförmigen Außenteil ausgebildet sind.

Die EP 2 730 445 A1 offenbart ein selbsteinstellendes Verbindungsstück zum Befestigen einer Zubehörkomponente eines Kraftstofftanks an einer Wand eines Kraftstofftanks, wobei das Verbindungsstück umfasst: einen Befestigungsabschnitt, der an einer Wand eines Kraftstofftanks an einer Befestigungsstelle angebracht werden kann; einen Flanschabschnitt, der an einer Zubehörkomponente des Kraftstofftanks befestigt werden kann, und einen Lastaufnahmeabschnitt, der sich zwischen dem Montageabschnitt und dem Flanschabschnitt befindet, wobei der Lastaufnahmeabschnitt eine Bewegung des Montageabschnitts und des Flanschabschnitts relativ zueinander ermöglicht.

### Zusammenfassung der Erfindung

Es ist eine Aufgabe der Erfindung, einen Kraftfahrzeugtank, umfassend ein Bauteil, das im Inneren des Tankbehälters befestigt ist, anzugeben, wobei vom Bauteil verursachte Geräusche möglichst wenig aus dem Kraftfahrzeugtank und daher wenig in den Innenraum eines Kraftfahrzeuges gelangen können.

Die Lösung der Aufgabe erfolgt durch einen Kraftfahrzeugtank mit Merkmalen gemäß Anspruch 1.

Der Kraftfahrzeugtank umfasst einen durch eine Tankwand ausgebildeten Tankbehälter und ein Bauteil, das im Inneren des Tankbehälters über ein Halteelement an der Tankwand befestigt ist, wobei das Halteelement zumindest einen Anbindungspunkt aufweist, zur Befestigung des Halteelements an der Tankwand, wobei das Halteelement zumindest ein Befestigungselement zur Befestigung des Bauteils am Halteelement aufweist, wobei das Halteelement zwischen dem Anbindungspunkt und dem Befestigungselement Federelemente aufweist, so dass das Bauteil über das Halteelement federelastisch entkoppelt an der Tankwand befestigt ist.

Erfindungsgemäß wird ein Bauteil, das möglicherweise unerwünschte Geräusche verursachen kann, über ein Halteelement an der Tankwand befestigt. Zur Befestigung wird aber kein starres Element verwendet, sondern ein Haltelement mit elastischen Federelementen, zwischen dem Anbindungspunkt, an welchem das Halteelement an der Tankwand befestigt ist und dem zu befestigenden Bauteil. Das Bauteil wird daher federelastisch entkoppelt an der Tankwand befestigt, so dass die Körperschallübertragung an die Tankwand und somit aus dem Tank reduziert wird.

Der Anbindungspunkt des Halteelements ist erfindungsgemäß unmittelbar an der Tankwand befestigt, insbesondere verschraubt oder verschweißt mit der Tankwand. Der Anbindungspunkt kann insbesondere durch einen Schraubbolzen ausgebildet werden.

Vorzugsweise bildet das Halteelement im Wesentlichen eine Ebene, hat also im Wesentlichen keine relevante vertikale Erstreckung. Insbesondere können die Federelemente in der Ebene ausgebildet sein und sich nicht vertikal erstrecken. Besonders bevorzugt hat das Halteelement im Wesentlichen die Form eines Kreises. Der Anbindungspunkt bzw. die Anbindungspunkte können aus dieser Ebene abstehen, so dass weitere Teile des Halteelements trotz Befestigung der Anbindungspunkte an der Tankwand nicht an der Tankwand anliegen.

Erfindungsgemäß weist das Halteelement zumindest drei Anbindungspunkte auf. Anbindungs-Federelemente, die Federelemente darstellen, verbinden erfindungsgemäß jeweils zwei benachbarte Anbindungspunkte miteinander. Diese Anbindungs-Federelemente sind kreisbogenförmig ausgebildet. Die Anbindungs-Federelemente bilden zusammen mit den Anbindungspunkten vorzugsweise den Außenumfang des Halteelements, insbesondere in der Form eines Kreises.

Erfindungsgemäß umfasst das Halteelement eine aus einem weichen Material bestehende Fläche als Federelement. "Weich" heißt dabei, dass die Fläche bei Befestigung des Bauteils an der Fläche auf Grund des Gewichts des Bauteils deutlich nachgibt.

Erfindungsgemäß ist die Fläche zumindest an Abschnitten ihres Außenumfanges mit übrigen Teilen des Halteelements verbunden.

Erfindungsgemäß ist die Fläche zumindest an Abschnitten ihres Außenumfanges mit den Anbindungs-Federelementen des Halteelements verbunden. Die Fläche ist daher von außen an den umgebenden, ebenfalls elastischen Anbindungs-Federelementen gehalten, bevorzugt im Wesentlichen ähnlich einem Trampolin. Die Anbindungs-Federelemente bilden bevorzugt einen Ring um die Fläche.

Bevorzugt weist die Fläche Versteifungsrippen auf, wobei die Versteifungsrippen symmetrisch oder asymmetrisch auf der Fläche verlaufen, also nicht rotationssymmetrisch oder spiegelsymmetrisch an der Fläche verteilt sind. Hierdurch kann das Schwingungsverhalten der Fläche verbessert werden, zur effizienten Reduzierung der Geräuschübertragung.

Das Befestigungselement, an welchem das Bauteil befestigt ist, ist vorzugsweise an der Fläche ausgebildet, bevorzugt an einem Rand der Fläche.

Bevorzugt bildet das Befestigungselement einen Haken oder Klipp. Das Bauteil kann dann in das Befestigungselement eingehakt bzw. eingeklipst werden.

Vorzugsweise steht der Anbindungspunkt bzw. die Anbindungspunkte aus der Ebene in einer ersten Richtung ab und steht das Befestigungselement bzw. die Befestigungselemente in der der ersten Richtung entgegengesetzten Richtung von der Ebene, insbesondere auch von der als Federelement wirkenden Fläche, ab.

Das Bauteil, das am Haltelement befestigt ist, kann ein bewegliches Teil beinhalten, insbesondere eine Kugel, so dass das Bauteil durch die Bewegung des Teils, beispielsweise durch Anschlag der Kugel an einer Wand, Geräusche produziert. Das Bauteil kann beispielsweise ein Ventil sein, insbesondere ein Roll-Over-Ventil oder ein Druckhalteventil. Das Bauteil kann beispielsweise auch eine Pumpe, insbesondere eine Kraftstoff-Förderpumpe, sein.

### Kurzbeschreibung der Zeichnungen

Die Erfindung wird im Folgenden beispielhaft unter Bezugnahme auf die Zeichnungen beschrieben.
- Fig. 1: ist eine Draufsicht auf ein Halteelement eines erfindungsgemäßen Kraftfahrzeugtanks.
- Fig. 2: ist eine Schnittdarstellung eines Halteelements gemäß Fig. 1.

### Detaillierte Beschreibung der Erfindung

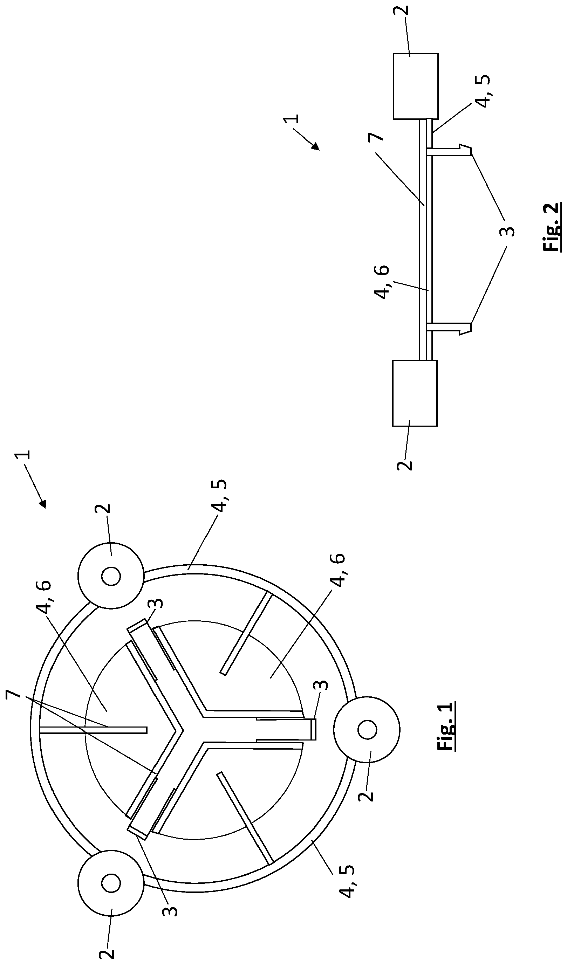

In den Fig. 1-2 ist ein Halteelement eines erfindungsgemäßen Kraftfahrzeugtanks dargestellt.

Ein nicht dargestellter Kraftfahrzeugtank umfasst einen durch eine Tankwand ausgebildeten Tankbehälter. Ein Bauteil ist im Inneren des Tankbehälters über das Halteelement 1 an der Tankwand befestigt.

Das Halteelement 1 bildet, wie in Fig. 1 - 2 ersichtlich, im Wesentlichen eine Ebene, nämlich einen Kreis.

Das Halteelement 1 weist drei Anbindungspunkt 2 auf, zur Befestigung des Halteelements 1 an der Tankwand. Die Anbindungspunkte 2 sind als abstehende Schraubdome ausgebildet.

In der Gegenrichtung der Anbindungspunkte 2 stehen mehrere Befestigungselemente 3, zur Befestigung des Bauteils am Halteelement 1, von der Ebene des Halteelements 1 ab (siehe Fig. 2). Die Befestigungselemente 3 sind in einer Draufsicht auf die Ebene (Fig. 1) jeweils zwischen den Anbindungspunkten 2 angeordnet. Die Befestigungselemente 3 bilden jeweils einen Haken oder Klipp zum Einhängen des zu befestigenden Bauteils.

Jeweils zwei benachbarte Anbindungspunkte 2 werden durch kreisbogenförmige Federelemente 4, die hier "Anbindungs-Federelemente" 5 genannt werden, miteinander verbunden. Die Anbindungs-Federelemente sind durch ihre dünne Form und das verwendete Material so ausgebildet, dass sie nachgeben können und eine federnde Wirkung aufweisen.

Eine runde Fläche 6, ist an mehreren Abschnitten ihres Außenumfanges mit den Anbindungs-Federelementen 5 des Halteelements verbunden. Die Fläche 6 besteht auch selbst aus einem weichen Material und wirkt ebenfalls als Federelement 4. Die Fläche 6 weist Versteifungsrippen 7 auf, wobei die Versteifungsrippen 7 symmetrisch oder asymmetrisch auf der Fläche 6 verlaufen, um eine gewünschte Festigkeit und gewünschte federnde Eigenschaften der Fläche 6 zu bewirken. Die Befestigungselemente 3 sind am Rand der Fläche 6 ausgebildet.

Ein zu befestigendes Bauteil, beispielsweise ein Roll-Over-Ventil, ein Druckhalteventil oder eine Pumpe, kann - in der Fig. 2 von unten - an den Befestigungselementen 3 befestigt werden und befindet sich dann unterhalb der Fläche 6 und somit unterhalb der Ebene des Halteelements 1, also auf der Seite des Halteelements 1, die der am Tank befestigten Seite gegenüberliegt.

Das Halteelement 1 weist somit, zwischen den Anbindungspunkten 2 und den Befestigungselementen 3, Federelemente 4 auf, so dass das Bauteil über das Halteelement 1 federelastisch entkoppelt an der Tankwand befestigt ist und somit Geräusche vom Bauteil weniger an die Tankwand und in das Kraftfahrzeug übertragen werden.

### Bezugszeichenliste

- 1: Halteelement
- 2: Anbindungspunkt
- 3: Befestigungselement
- 4: Federelement
- 5: Anbindungs-Federelement
- 6: Fläche
- 7: Versteifungsrippe

## Patentansprüche

1. Kraftfahrzeugtank, umfassend einen durch eine Tankwand ausgebildeten Tankbehälter und ein Bauteil, das im Inneren des Tankbehälters über ein Halteelement (1) an der Tankwand befestigt ist, wobei das Halteelement (1) zumindest einen Anbindungspunkt (2) aufweist, zur Befestigung des Halteelements (1) an der Tankwand, wobei das Halteelement (1) zumindest ein Befestigungselement (3) zur Befestigung des Bauteils am Halteelement (1) aufweist, wobei das Halteelement (1) zwischen dem Anbindungspunkt (2) und dem Befestigungselement (3) Federelemente (4) aufweist, so dass das Bauteil über das Halteelement (1) federelastisch entkoppelt an der Tankwand befestigt ist, **dadurch gekennzeichnet, dass** der Anbindungspunkt (2) unmittelbar an der Tankwand befestigt ist, wobei das Halteelement (1) zumindest drei Anbindungspunkte (2) aufweist und kreisbogenförmige Anbindungs-Federelemente (5), die Federelemente (4) darstellen, jeweils zwei benachbarte Anbindungspunkte (2) miteinander verbinden, wobei das Halteelement (1) eine aus einem weichen Material bestehende runde Fläche (6) als Federelement (4) umfasst, wobei die Fläche (6) zumindest an Abschnitten ihres Außenumfanges mit den Anbindungs-Federelementen (5) des Halteelements verbunden ist.

2. Kraftfahrzeugtank nach Anspruch 1,
**dadurch gekennzeichnet, dass** der Anbindungspunkt (2) unmittelbar an der Tankwand verschraubt ist oder verschweißt mit der Tankwand.

3. Kraftfahrzeugtank nach zumindest einem der vorhergehenden Ansprüche,
**dadurch gekennzeichnet, dass** das Halteelement (1) im Wesentlichen eine Ebene bildet, bevorzugt mit Kreisform.

4. Kraftfahrzeugtank nach zumindest einem der vorhergehenden Ansprüche,
**dadurch gekennzeichnet, dass** die Fläche (6) Versteifungsrippen (7) aufweist, wobei die Versteifungsrippen (7) symmetrisch oder asymmetrisch auf der Fläche (6) verlaufen.

5. Kraftfahrzeugtank nach zumindest einem der vorhergehenden Ansprüche,
**dadurch gekennzeichnet, dass** das Befestigungselement (3) an der Fläche (6) ausgebildet ist, bevorzugt an einem Rand der Fläche (6).

6. Kraftfahrzeugtank nach zumindest einem der vorhergehenden Ansprüche,
**dadurch gekennzeichnet, dass** das Befestigungselement (3) einen Haken oder Klipp bildet.

7. Kraftfahrzeugtank nach zumindest einem der vorhergehenden Ansprüche,
**dadurch gekennzeichnet, dass** das Bauteil ein Ventil ist, insbesondere ein Roll-Over-Ventil oder ein Druckhalteventil, oder das Bauteil eine Pumpe ist.

## Claims

1. Motor vehicle tank, comprising a tank container formed by a tank wall, and a component which is fastened to the tank wall in the interior of the tank container by means of a holding element (1), **wherein** the holding element (1) has at least one attachment point (2) for fastening the holding element (1) to the tank wall, wherein the holding element (1) has at least one fastening element (3) for fastening the component to the holding element (1), wherein the holding element (1) has spring elements (4) between the attachment point (2) and the fastening element (3), thus ensuring that the component is fastened to the tank wall in a spring-elastically decoupled manner by means of the holding element (1) **characterized in that** the attachment point (2) is fastened directly to the tank wall wherein the holding element (1) has at least three attachment points (2), and circular shaped attachment spring elements (5), which form spring elements (4), in each case connect two adjacent attachment points (2) to one another wherein the holding element (1) comprises a surface (6) consisting of a soft material as the spring element (4), wherein the surface (6) is connected to attachment spring elements (5) of the holding element (1) at least in sections of the outer circumference of said surface.

2. Motor vehicle tank according to Claim 1,
**characterized in that** the attachment point (2) is screwed directly to the tank wall, or welded to the tank wall.

3. Motor vehicle tank according to at least one of the preceding claims, **characterized in that** the holding element (1) substantially forms a plane, preferably with a circular shape.

4. Motor vehicle tank according to at least one of Claims 5 to 7,
**characterized in that** the surface (6) has stiffening ribs (7), wherein the stiffening ribs (7) extend symmetrically or asymmetrically on the surface (6).

5. Motor vehicle tank according to at least one of Claims 5 to 8,
**characterized in that** the fastening element (3) is formed on the surface (6), preferably on an edge of the surface (6).

6. Motor vehicle tank according to at least one of the preceding claims, **characterized in that** the fastening element (3) forms a hook or clip.

7. Motor vehicle tank according to at least one of the preceding claims, **characterized in that** the component is a valve, in particular a roll-over valve or a pressure-maintaining valve, or the component is a pump.

## Revendications

1. Réservoir de véhicule automobile, comprenant un contenant de réservoir réalisé par une paroi de réservoir et un composant qui est fixé à l'intérieur du contenant de réservoir à la paroi de réservoir par l'intermédiaire d'un élément de maintien (1), l'élément de maintien (1) présentant au moins un point d'attache (2) pour fixer l'élément de maintien (1) à la paroi de réservoir, l'élément de maintien (1) présentant au moins un élément de fixation (3) pour fixer le composant à l'élément de maintien (1), l'élément de maintien (1) présentant des éléments élastiques (4) entre le point d'attache (2) et l'élément de fixation (3), de telle sorte que le composant est fixé à la paroi de réservoir par l'intermédiaire de l'élément de maintien (1) de manière découplée élastiquement, **caractérisé en ce que** le point d'attache (2) est fixé directement à la paroi de réservoir, l'élément de maintien (1) présentant au moins trois points d'attache (2) et des éléments élastiques d'attache (5) en forme d'arc de cercle, qui constituent des éléments élastiques (4), reliant respectivement entre eux deux points d'attache (2) voisins, l'élément de maintien (1) comprenant en tant qu'élément élastique (4) une surface ronde (6) constituée d'un matériau souple, la surface (6) étant reliée aux éléments élastiques d'attache (5) de l'élément de maintien au moins sur des section de sa circonférence extérieure.

2. Réservoir de véhicule automobile selon la revendication 1, **caractérisé en ce que** le point d'attache (2) est vissé directement sur la paroi de réservoir ou est soudé à la paroi de réservoir.

3. Réservoir de véhicule automobile selon au moins l'une quelconque des revendications précédentes, **caractérisé en ce que** l'élément de maintien (1) forme essentiellement un plan, de préférence de forme circulaire.

4. Réservoir de véhicule automobile selon au moins l'une quelconque des revendications précédentes, **caractérisé en ce que** la surface (6) présente des nervures de renforcement (7), les nervures de renforcement (7) s'étendant de manière symétrique ou asymétrique sur la surface (6).

5. Réservoir de véhicule automobile selon au moins l'une quelconque des revendications précédentes, **caractérisé en ce que** l'élément de fixation (3) est réalisé sur la surface (6), de préférence sur un bord de la surface (6).

6. Réservoir de véhicule automobile selon au moins l'une quelconque des revendications précédentes, **caractérisé en ce que** l'élément de fixation (3) forme un crochet ou un clip.

7. Réservoir de véhicule automobile selon au moins l'une quelconque des revendications précédentes, **caractérisé en ce que** le composant est une soupape, notamment une soupape roll-over ou une soupape de maintien de pression, ou le composant est une pompe.
